# EUROPEAN PATENT APPLICATION

(11) **EP 4 378 301 A1**
(43) Date of publication of application: **05.06.2024**
(21) Application number: 22213284.7
(22) Date of filing: 13.12.2022
(51) Int. Cl.: A01G 7/04, A01G 22/05, A01G 9/24

(54) **A DEVICE AND A METHOD FOR ILLUMINATING AND GROWING TOMATO PLANTS IN CONFINED SPACES WITHOUT NATURAL LIGHT AND IN GREENHOUSE CONDITIONS**

(30) Priority: 01.12.2022 PL 44301622
(71) Applicant: Bilberry Sp. z o.o., 91-341 Lodz (PL)
(72) Inventor: DOBRYNIN, Krzysztof, 92-724 Lodz (PL); KRAIN, Mateusz, 42-693 Potepa (PL)
(74) Representative: Kancelaria Eupatent.pl Sp. z.o.o

(57) **Abstract**

A device for illuminating tomato plants in confined spaces without natural light and in greenhouse conditions. The device has a tight housing formed as a radiator, RGB (Red, Green, Blue) Light Emitting Diodes (LEDs) fitted within the tight housing and connected to an electronic power supply system indirectly via a spectroradiometer. The LEDs have adjustable power at least between 160 µmol/m²s to 200 µmol/m²s. The LEDs are electroluminescent LEDs with a light band that includes violet and blue regions with wavelengths of 400 to 500 nm, red and far red regions with wavelengths of 600 to 800 nm and/or green spectral regions with wavelengths of 500 to 600 nm.

## Description

### TECHNICAL FIELD

The invention relates to a device and a method for illuminating and growing tomato plants in confined spaces without natural light and in greenhouse conditions.

### BACKGROUND

Lamps or light sources are commonly used in plant production for accelerating and enhancing plant growth or fruit development. These are usually typical, commonly used fixtures in which light sources with higher light energy flux are used.

Light density and spectrum are the factors that determine cellular processes, growth and development of plants. Plants have photoreceptors that precisely capture light with a specific wavelength; 4 such photoreceptors have been reported so far. Red and blue light have the most significant effect on plant growth, because it is the primary source of energy for CO2 fixation during photosynthesis (Lin et al. 2013. Sci. Hort. 150:86-91). In addition, red light is necessary for plant development, including the development of the photosynthetic apparatus (Paradiso et al. 2011. Acta Hortic., 893: 849-55). Blue light determines, for example, chlorophyll biosynthesis and chloroplast development, stoma movements and photomorphogenesis (Demarsy and Frankhauser 2009. Curr. Opin. Plant Biol. 12:69-74). UV light may improve resistance to diseases and change leaf color. Light modifies the chemical composition of plants, both their vegetative parts and seeds or fruit. Light having a specific spectrum selected for the species being grown and the plant developmental phase is increasingly more frequently used in special farming systems that ensure completely controlled thermal and lighting conditions. In this case, light from energy-saving LED (Light-Emitting Diode) units is used. To use diode units effectively in horticultural production, their characteristics are increasingly more often adjusted.

A Polish patent application PL403406 discloses a light fixture with LEDs for band illumination which contains an elongated body with a passage in which a power supply unit is fitted, connected electrically with LEDs arranged in a row. The body of the light fixture has reflectors, also acting as a radiator, arranged diagonally down from the central part of the body of the light fixture.

A Polish patent application PL432494 discloses a method of plant illumination, wherein light pulses are cyclically supplied from a light source to plants at any stage of their development so that one illumination cycle contains a bright pulse with duration t1 and a dark pulse with duration t2, wherein illumination frequency is within a range of between 2 cycles/minute and 6 cycles/minute, and the ratio of bright pulse duration t1 to cycle duration t1 + t2 is within a range of between 0.25 and 0.5. The application also concerns a plant illumination system shown in the figure.

A PCT application WO0054567 discloses a device and a method for supporting seed germination and plant growth. The wavelength of radiation emitted toward plants is in the visible light wavelength range, approx. 400-700 nm. Light may change in a pulsed manner with a frequency of between 10 and 150 pulses per minute, wherein each light pulse has a duration of 0.1-0.9 s. Intervals between pulses, that is, the time when the lamps are off, are between 0.1 and 6 seconds. The device contains means for directing a number of light pulses on seeds and plants and means for controlling the duration of pulses and intervals between them.

A European patent application EP3127421 discloses a device and a method for supporting plant growth using pulsed light. The solution involves alternate emission of a red light pulse with a wavelength of 600-680 nm and far red or infrared light with a wavelength of 700-900 nm toward plants. Plants are illuminated continuously but using various types of light wavelengths. To obtain red and infrared light, the device contains two types of LED light sources, alternately activated.

A PCT application WO2019060788 discloses a method for supplying power to multiple lighting passages in a horticultural lighting device. Illuminating plants by switching lamps on and off cyclically stimulates biochemical reactions in plants during photosynthesis. Within the system, pulsed illumination of plants is used with a frequency of between 120 Hz and 720 Hz and may be invisible to the human eye. Pulse delay, that is, the period in which lamps are off, is between 500 ps and 3 ms. The lamp illumination frequency is controlled by a PWM controller, which adjusts the pulse duty ratio. In the disclosed solution, at least two LED fixtures are used, each emitting light with a different wavelength.

### SUMMARY OF THE INVENTION

The known methods and devices for supporting plant growth do not cover the whole plant growth cycle from the start of germination through vegetative growth to fruit formation and development. High-power lighting has been used in plant growth facilities with very high-intensity light, consisting mainly of red color. Such a type of light delivered is only responsible for increasing photosynthesis yield (fixating function of light) and it does not include the wavelengths necessary for photomorphogenic processes, responsible for factors such as plant morphology and development, photoperiodic responses, production of metabolites and phototropic orientation with respect to light. As a result, plants are grown in stressful conditions, and the yield and produce quality are not significantly higher. Therefore, to ensure more effective growth and a higher quality of produce from tomato plants, a light spectrum with a composition not currently used in greenhouses and plantations in confined spaces without natural light has been developed.

In the method for illuminating and breeding tomato plants in confined spaces without natural light and in greenhouse conditions as presented herein, the breeding/growing facility is equipped with a ventilation system and environmental sensors to monitor at least temperature and humidity. The temperature of the growing facility is set so that it is between 24 and 26°C during the day and 20-22°C at night, and the humidity is set so that it is in a range of 50-60%. Temperature and humidity control is preferably executed using an air conditioner, wherein plants are sprayed, preferably with water or an aqueous solution of foliar fertilizer, when the humidity drops below 50%.

For soilless farming in mineral wool, plants are watered with water having a pH value of 4.5-5.25, preferably of 4.8, and fertilized with 0.2% ±0.15 fertilizer solution with composition listed in Table 1 and preferably a pH value of 4.8; EC 2.60 mS/cm. In addition, a calcium and magnesium supplement is preferably used for watering in the vegetative phase and throughout the generative phase, with composition listed in Table 2 and dosage: between 0.5 and 2 mL/1 L water, preferably 1 mL/1 L water. Foliar spraying of plants is performed once a week with 15-20%, preferably 17% calcium nitrate solution and a supplemental fertilizer with composition listed in Table 3; dosage: 2 mL/1 L water, ±0.5 µL/L water.

**Table 1. The percentage content of components in the fertilizer used in tomato farming.**

| Component | Content [%] |
|---|---|
| N | 8.2 |
| MgO | 2.8 |
| Cu | 0.01 |
| Mo | 0.003 |
| P₂O₅ | 11.5 |
| SO₃ | 5.7 |
| Fe | 0.23 |
| Zn | 0.03 |
| K₂O | 36.1 |
| B | 0.04 |
| Mn | 0.14 |

**Table 2. The percentage content of components in the calcium and magnesium supplement used in tomato farming.**

| Component | Content [%] |
|---|---|
| Total nitrogen | 5.9 |
| Nitrate nitrogen | 5.1 |
| Amide nitrogen | 0.8 |
| Calcium oxide | 6.8 |
| Magnesium oxide | 2.4 |

**Table 3. The percentage content of components in the supplemental fertilizer in tomato farming.**

| Component | Content [%] |
|---|---|
| N | 3.5 |
| Cu | 0.002 |
| Mo | 0.001 |
| P₂O₅ | 4.0 |
| Fe | 0.04 |
| Zn | 0.002 |
| K₂O | 7.5 |
| B | 0.01 |
| Mn | 0.01 |

During plant growth, the plants are illuminated with a light fixture fitted with LEDs for 16 hours per 24 hours, so that at least one tomato plant is illuminated in each phase of development (including the seed), while light intensity not lower than 160 µmol/m²/s is maintained for 16 hours with a spectrum adjusted to the phase of plant growth so that the red to blue light ratio (Red to Blue; R:B) is at least 1.70 ± 0.15.

The light of the invention may be used in lower doses during sunny days in the greenhouse and in higher doses when sunlight is insufficient. The current demand is determined using a PAR sensor and a spectroradiometer. Lighting intensity and spectral composition are adjusted automatically using specially designed software.

In the vegetative phase, farming is conducted so that:

### I. PAR

Both in indoor and in greenhouse farming, illumination of 160 µmol/m²s for 16 hours per 24 hours is maintained on the top surfaces of plant leaves.

For greenhouse farming, the PAR value delivered to plants both from light fixtures and from sunlight is continuously monitored using a PAR sensor. The PAR value delivered to plants from fixtures is adjusted to ambient conditions using a digital machine so that the total of sunlight and supplemental light is 160 µmol/m²s at the top plant leaves. The light fixture is preferably fitted with a spectroradiometer used with software to adjust the light spectrum to current weather conditions in real time so that a constant light spectrum is maintained throughout the growth phase irrespective of the current ambient conditions.

When the detected value is too low, the PAR sensor automatically increases fixture power. When the PAR value is too high, the fixture power is automatically reduced.

### II. Spectrum

During the vegetative phase in a farming tent, a spectrum consisting of white light with peak emissions of artificial blue light and artificial red light is maintained for 15-17 hours, preferably for 16 hours per 24 hours. The red to blue light ratio (Red to Blue; R:B) is 1.70 ± 0.15.

During the vegetative phase in a greenhouse, natural sunlight is supplemented for 16 hours per 24 hours to finally obtain the aforementioned spectrum, that is, white light with blue and red peaks; R:B 1.70 ± 0.15.

The following was found when observing the effectiveness and action of the method for tomato farming during the vegetative phase without natural light of the invention:
- 5% more leaves compared to plants grown under a control lamp (HPS),
- 43% power savings compared to farming under an HPS lamp,
- 22% greater leaf area compared to farming under an HPS lamp.

**Table 4. Comparison of light source parameters and characteristics of farmed plants.**

| Illumination | Average number of leaves [items] | Total leaf area [cm²] | Fixture power [W] | Energy used for 16h of illumination [kWh] |
|---|---|---|---|---|
| Light fixture with an LED spectrum until the vegetative phase | 10.5 | 8140 | 160 | 2.56 |
| HPS | 10 | 6661 | 280 | 4.48 |

In the generative growth phase, farming is conducted so that:

### 1. PAR

Both in indoor and greenhouse farming, the light intensity of 200 µmol/m²s for 15-17 hours per 24 hours, preferably for 16 hours per 24 hours, is maintained on the top surfaces of plant leaves.

For greenhouse farming, the PAR value delivered to plants both from light fixtures and from sunlight is continuously monitored using a PAR sensor. The PAR value delivered to plants from fixtures is adjusted to ambient conditions using software so that the total of sunlight and supplemental light is 200 µmol/m²s at the top plant leaves. The light fixture is fitted with a spectroradiometer to automatically adjust the light spectrum to current weather conditions in real time so that a constant light spectrum is maintained throughout the growth phase irrespective of the current ambient conditions.

When the detected value is too low, the PAR sensor automatically increases fixture power. When the PAR value is too high, the fixture power is automatically reduced.

### 2. Spectrum

During the generative phase in a farming tent, a spectrum consisting of white light with peak emissions of artificial blue light and artificial red light is maintained for 16 hours per 24 hours. The red to blue light ratio (Red to Blue; R:B) is 2.40 ± 0.15.

During the generative phase in a greenhouse, natural sunlight is supplemented with a light fixture for 15-17 hours/24 hours, preferably for 16 hours per 24 hours, so that as a result, a spectrum consisting of white light with blue and red peaks is obtained, with a red to blue light ratio of 10.00 ± 0.15.

The light spectrum in greenhouse farming is continuously monitored using a spectroradiometer. The spectroradiometer continuously supplements any missing wavelengths so that a constant spectrum is maintained throughout the generative phase.

The invention, using the function of adaptation of the PAR value and spectral composition, achieves a shorter plant growth cycle and increases the yield and quality of produce, thus improving the effectiveness of the tomato production process and reducing power consumption.

The following was found when observing the effectiveness and action of the method for tomato farming during the generative phase without natural light of the invention:
- power consumption decreased by 54%,
- the weight of tomatoes produced from 1 W using the aforementioned spectrum was 134% higher compared to a control lamp (HPS),
- 6% more tomatoes on average were obtained from one plant farmed using the aforementioned spectrum compared to plants farmed using a control lamp (HPS),
- the average weight of a single tomato was 17% greater with the aforementioned spectrum compared to the HPS lamp,
- the total weight of tomatoes with footstalks produced by one plant was 21% higher compared to results under the HPS lamp,
- the content of reducing sugars in tomatoes harvested from the aforementioned spectrum was 30% higher compared to HPS,
- vitamin C content in tomatoes was 7% higher compared to fruit harvested under the HPS lamp,
- lycopene content in tomatoes was 4% higher compared to fruit harvested under the HPS lamp.

**Table 5. Comparison of power consumption between the spectrum being part of the invention and commonly used HPS greenhouse lighting.**

| Illumination | Fixture power [W] | Energy used for 16 h of illumination [kWh] |
|---|---|---|
| Light fixture with an LED spectrum until the vegetative phase | 129 | 2.06 |
| HPS | 280 | 4.48 |

**Table 6. Comparison of results obtained with the spectrum being part of the invention and commonly used HPS greenhouse lighting.**

| Illumination | Weight of tomatoes produced from 1 W [g/W] | Number of tomatoes per one plant [items] | Average weight of one tomato [g] | Total weight of tomatoes with footstalks produced by one plant [g] |
|---|---|---|---|---|
| Light fixture with an LED spectrum until the generative phase | 10.67 | 17 | 82 | 1377 |
| HPS | 4.55 | 16 | 70 | 1138 |

**Table 7. Comparison of biochemical parameters obtained with the spectrum being part of the invention and commonly used HPS greenhouse lighting.**

| Illumination | Content of reducing sugars [mg/mL tomato extract] | Vitamin C content [mg/100 mL tomato extract] | Lycopene content [mg/kg] |
|---|---|---|---|
| Light fixture with an LED spectrum until the generative phase | 1.99 | 11.39 | 68.74 |
| HPS | 1.53 | 10.65 | 66.25 |

The following was found when observing the effectiveness and action of the method for tomato farming during the phase in greenhouse conditions of the invention:
- power savings of 20% compared to standard greenhouse lighting,
- the total of tomatoes harvested from plants additionally illuminated using the aforementioned spectrum was 13% greater than the total of tomatoes harvested from plants additionally illuminated with HPS lamps.

**Table 8. Comparison of results obtained with the spectrum being part of the invention and commonly used HPS greenhouse lighting.**

| Illumination | Total tomatoes harvested [kg] | Actual power of a single light fixture [W] | Energy used during 16 h of additional illumination (20 light fixtures) [kWh] |
|---|---|---|---|
| Light fixture with an LED spectrum until the generative phase | 697.18 | 585 | 187.2 |
| HPS | 619.70 | 730 | 233.6 |

A device for illuminating tomato plants in confined spaces without natural light and in greenhouse conditions contains a housing formed as a radiator, having known means to ensure its tightness, in which LEDs in the RGB system are fitted, connected to a known electronic power supply system indirectly through a spectroradiometer. The LEDs have adjustable power in a range of at least 160 µmol/m²s to 200 µmol/m²s. Electroluminescent LEDs used in the fixture are selected so that the light band includes violet and blue regions with wavelengths of 400-500 nm, red and far red regions with wavelengths of 600-800 nm and/or green spectral regions with wavelengths of 500-600 nm.

### DETAILED DESCRIPTION OF EXAMPLE EMBODIMENTS

### Example 1 - greenhouse farming

In the method for illuminating and farming tomato plants in confined spaces without natural light and in greenhouse conditions as presented herein, the breeding/growing facility is equipped with a ventilation system and environmental sensors to monitor temperature and humidity. The temperature of the growing facility is set so that it is between 24 and 26°C during the day and 20-22°C at night, and the humidity is set so that it is in a range of 50-60%. Temperature and humidity control is executed using an air conditioner, wherein plants are sprayed with water when the humidity drops below 50%.

For soilless farming in mineral wool, plants are watered with water having a pH of 4.8 and fertilized with 0.2%±0.15 fertilizer solution with composition listed in Table 1.1 and a pH value of 4.8; EC 2.60 mS/cm. In addition, a calcium and magnesium supplement is used for watering in the vegetative phase and throughout the generative phase, with composition listed in Table 1.2 and a dosage of 1 mL/1 L water. Foliar spraying of plants is performed once a week with 17% calcium nitrate solution and a supplemental fertilizer with composition listed in Table 1.3; dosage: 2 mL/1 L water, ±0.5 µL/L water.

**Table 1.1. The percentage content of components in the fertilizer used in tomato farming.**

| Component | Content [%] |
|---|---|
| N | 8.2 |
| MgO | 2.8 |
| Cu | 0.01 |
| Mo | 0.003 |
| P₂O₅ | 11.5 |
| SO₃ | 5.7 |
| Fe | 0.23 |
| Zn | 0.03 |
| K₂O | 36.1 |
| B | 0.04 |
| Mn | 0.14 |

**Table 1.2. The percentage content of components in the calcium and magnesium supplement used in tomato farming.**

| Component | Content [%] |
|---|---|
| Total nitrogen | 5.9 |
| Nitrate nitrogen | 5.1 |
| Amide nitrogen | 0.8 |
| Calcium oxide | 6.8 |
| Magnesium oxide | 2.4 |

**Table 1.3. The percentage content of components in the supplemental fertilizer in tomato farming.**

| Component | Content [%] |
|---|---|
| N | 3.5 |
| Cu | 0.002 |
| Mo | 0.001 |
| P₂O₅ | 4.0 |
| Fe | 0.04 |
| Zn | 0.002 |
| K₂O | 7.5 |
| B | 0.01 |
| Mn | 0.01 |

During plant growth, the plants are illuminated with a light fixture fitted with LEDs for 16 hours per 24 hours, so that at least one tomato plant is illuminated in each phase of development (including the seed), while light intensity not lower than 160 µmol/m²s is maintained for 16 hours and a spectrum adjusted to the phase of plant growth so that the red to blue light ratio (Red to Blue; R:B) is at least 1.70 ± 0.15.

The light in the method of the invention may be used in lower doses during sunny days in the greenhouse and in higher doses when sunlight is insufficient. The current light demand is determined using a PAR sensor and a spectroradiometer. Lighting intensity and spectral composition are adjusted automatically using specially designed software.

In the vegetative phase, farming is conducted so that:

### III.PAR

Both in indoor and in greenhouse farming, illumination of 160 µmol/m²s for 16 hours per 24 hours is maintained on the top surfaces of plant leaves.

The PAR value delivered to plants both from light fixtures and from sunlight is continuously monitored using a PAR sensor. The PAR value delivered to plants from fixtures is adjusted to ambient conditions using a digital machine so that the total of sunlight and supplemental light is 160 µmol/m²s at the top plant leaves. The light fixture is fitted with a spectroradiometer used with software to adjust the light spectrum to current weather conditions in real time so that a constant light spectrum is maintained throughout the growth phase irrespective of the current ambient conditions.

When the detected value is too low, the PAR sensor automatically increases fixture power. When the PAR value is too high, the fixture power is automatically reduced.

### IV. Spectrum

During the vegetative phase in a greenhouse, natural sunlight is supplemented for 16 hours per 24 hours so as to finally obtain the aforementioned spectrum, that is, white light with blue and red peaks; R:B 1.70 ± 0.15.

The following was found when observing the effectiveness and action of the method for tomato farming during the vegetative phase without natural light of the invention:
- 5% more leaves compared to plants farmed under a control lamp (HPS),
- 43% power savings compared to farming under an HPS lamp,
- 22% greater leaf area compared to farming under an HPS lamp.

**Table 1.4. Comparison of light source parameters and characteristics of farmed plants.**

| Illumination | Average number of leaves [items] | Total leaf area [cm²] | Fixture power [W] | Energy used for 16 h of illumination [kWh] |
|---|---|---|---|---|
| Light fixture with an LED spectrum until the vegetative phase | 10.5 | 8140 | 160 | 2.56 |
| HPS | 10 | 6661 | 280 | 4.48 |

In the generative growth phase, farming is conducted so that:

### 3. PAR

Light intensity of 200 µmol/m²s for 16 hours per 24 hours is maintained on the top surfaces of plant leaves.

The PAR value delivered to plants both from light fixtures and from sunlight is continuously monitored using a PAR sensor. The PAR value delivered to plants from fixtures is adjusted to ambient conditions using software so that the total of sunlight and supplemental light is 200 µmol/m²s at the top plant leaves. The light fixture is fitted with a spectroradiometer to automatically adjust the light spectrum to current weather conditions in real time so that a constant light spectrum is maintained throughout the growth phase irrespective of the current ambient conditions.

When the detected value is too low, the PAR sensor automatically increases fixture power. When the PAR value is too high, the fixture power is automatically reduced.

### 4. Spectrum

During the generative phase in a greenhouse, natural sunlight is supplemented with a light fixture for 16 hours per 24 hours, so that as a result, a spectrum consisting of white light with blue and red peaks is obtained, with a red to blue light ratio of 10.00 ± 0.15.

The light spectrum in greenhouse farming is continuously monitored using a spectroradiometer. The spectroradiometer continuously supplements any missing wavelengths so that a constant spectrum is maintained throughout the generative phase.

The invention, using the function of adaptation of the PAR value and spectral composition, achieves a shorter plant growth cycle and increases the yield and quality of produce, thus improving the effectiveness of the tomato production process and reducing power consumption.

The following was found when observing the effectiveness and action of the method for tomato farming during the generative phase without natural light of the invention:
- power consumption decreased by 54%,
- the weight of tomatoes produced from 1 W using the aforementioned spectrum was 134% higher compared to a control lamp (HPS),
- 6% more tomatoes on average were obtained from one plant farmed using the aforementioned spectrum compared to plants farmed using a control lamp (HPS),
- the average weight of a single tomato was 17% greater with the aforementioned spectrum compared to the HPS lamp,
- the total weight of tomatoes with footstalks produced by one plant was 21% higher compared to results under the HPS lamp,
- the content of reducing sugars in tomatoes harvested from the aforementioned spectrum was 30% higher compared to HPS,
- vitamin C content in tomatoes was 7% higher compared to fruit harvested under the HPS lamp,
- lycopene content in tomatoes was 4% higher compared to fruit harvested under the HPS lamp.

**Table 1.5. Comparison of power consumption between the spectrum being part of the invention and commonly used HPS greenhouse lighting.**

| Illumination | Fixture power [W] | Energy used for 16 h of illumination [kWh] |
|---|---|---|
| Light fixture with an LED spectrum until the vegetative phase | 129 | 2.06 |
| HPS | 280 | 4.48 |

**Table 1.6. Comparison of results obtained with the spectrum being part of the invention and commonly used HPS greenhouse lighting.**

| Illumination | Weight of tomatoes produced from 1 W [g/W] | Number of tomatoes per one plant [items] | Average weight of one tomato [g] | Total weight of tomatoes with footstalks produced by one plant [g] |
|---|---|---|---|---|
| Light fixture with an LED spectrum until the generative phase | 10.67 | 17 | 82 | 1377 |
| HPS | 4.55 | 16 | 70 | 1138 |

**Table 1.7. Comparison of biochemical parameters obtained with the spectrum being part of the invention and commonly used HPS greenhouse lighting.**

| Illumination | Content of reducing sugars [mg/mL tomato extract] | Vitamin C content [mg/100 mL tomato extract] | Lycopene content [mg/kg] |
|---|---|---|---|
| Light fixture with an LED spectrum until the generative phase | 1.99 | 11.39 | 68.74 |
| HPS | 1.53 | 10.65 | 66.25 |

The following was found when observing the effectiveness and action of the method for tomato farming during the phase in greenhouse conditions of the invention:
- power savings of 20% compared to standard greenhouse lighting,
- the total of tomatoes harvested from plants additionally illuminated using the aforementioned spectrum was 13% greater than the total of tomatoes harvested from plants additionally illuminated with HPS lamps.

**Table 1.8. Comparison of results obtained with the spectrum being part of the invention and commonly used HPS greenhouse lighting.**

| Illumination | Total tomatoes harvested [kg] | Actual power of a single light fixture [W] | Energy used during 16 h of additional illumination (20 light fixtures) [kWh] |
|---|---|---|---|
| Light fixture with an LED spectrum until the generative phase | 697.18 | 585 | 187.2 |
| HPS | 619.70 | 730 | 233.6 |

A device for illuminating tomato plants in confined spaces without natural light and in greenhouse conditions contains a housing formed as a radiator, having known means to ensure its tightness, in which LEDs in the RGB system are fitted, connected to a known electronic power supply system indirectly through a spectroradiometer. The LEDs have adjustable power ranging from 160 µmol/m²s to 200 µmol/m²s. Electroluminescent LEDs used in the fixture are selected so that the light band includes violet and blue regions with wavelengths of 400-500 nm, red and far red regions with wavelengths of 600-800 nm and/or green spectral regions with wavelengths of 500-600 nm.

### Example 2 - farming in confined spaces without natural light - indoor farming

In the method for illuminating and breeding tomato plants in confined spaces without natural light as presented herein, the breeding/growing facility is equipped with a ventilation system and environmental sensors to monitor temperature and humidity. The temperature of the growing facility is set so that it is between 24 and 26°C during the day and 20-22°C at night, and the humidity is set so that it is in a range of 50-60%. Temperature and humidity control is executed using an air conditioner, wherein plants are sprayed with water when the humidity drops below 50%.

For soilless farming in mineral wool, plants are watered with water having a pH of 4.8 and fertilized with 0.2%±0.15 fertilizer solution with composition listed in Table 2.1 and a pH value of 4.8; EC 2.60 mS/cm. In addition, a calcium and magnesium supplement is used for watering in the vegetative phase and throughout the generative phase, with composition listed in Table 2.2 and a dosage of 1 mL/1 L water. Foliar spraying of plants is performed once a week with 17% calcium nitrate solution and a supplemental fertilizer with composition listed in Table 2.3; dosage: 2 mL/1 L water, ±0.5 µL/L water.

**Table 2.1. The percentage content of components in the fertilizer used in tomato farming.**

| Component | Content [%] |
|---|---|
| N | 8.2 |
| MgO | 2.8 |
| Cu | 0.01 |
| Mo | 0.003 |
| P₂O₅ | 11.5 |
| SO₃ | 5.7 |
| Fe | 0.23 |
| Zn | 0.03 |
| K₂O | 36.1 |
| B | 0.04 |
| Mn | 0.14 |

**Table 2.2. The percentage content of components in the calcium and magnesium supplement used in tomato farming.**

| Component | Content [%] |
|---|---|
| Total nitrogen | 5.9 |
| Nitrate nitrogen | 5.1 |
| Amide nitrogen | 0.8 |
| Calcium oxide | 6.8 |
| Magnesium oxide | 2.4 |

**Table 2.3. The percentage content of components in the supplemental fertilizer in tomato farming.**

| Component | Content [%] |
|---|---|
| N | 3.5 |
| Cu | 0.002 |
| Mo | 0.001 |
| P₂O₅ | 4.0 |
| Fe | 0.04 |
| Zn | 0.002 |
| K₂O | 7.5 |
| B | 0.01 |
| Mn | 0.01 |

During plant growth, the plants are illuminated with a light fixture fitted with LEDs for 16 hours per 24 hours, so that at least one tomato plant is illuminated in each phase of development (including the seed), while light intensity not lower than 160 µmol/m²s is maintained for 16 hours and a spectrum adjusted to the phase of plant growth so that the red to blue light ratio (Red to Blue; R:B) is at least 1.70 ± 0.15.

The light in the method of the invention may be used in lower doses during sunny days in the greenhouse and in higher doses when sunlight is insufficient. The current light demand is determined using a PAR sensor and a spectroradiometer. Lighting intensity and spectral composition are adjusted automatically using specially designed software.

In the vegetative phase, farming is conducted so that:

### V. PAR

Both in indoor and in greenhouse farming, illumination of 160 µmol/m²s for 16 hours per 24 hours is maintained on the top surfaces of plant leaves.

The PAR value delivered to plants from light fixtures is continuously monitored using a PAR sensor. The PAR value delivered to plants from fixtures is adjusted using a digital machine so that the total supplemental light is 160 µmol/m²s at the top plant leaves. The light fixture is fitted with a spectroradiometer used with software to adjust the light spectrum to current conditions in real time so that a constant light spectrum is maintained throughout the growth phase.

When the detected value is too low, the PAR sensor automatically increases fixture power. When the PAR value is too high, the fixture power is automatically reduced.

### VI. Spectrum

During the vegetative phase in a farming tent, a spectrum consisting of white light with peak emissions of artificial blue light and artificial red light is maintained for 16 hours per 24 hours. The red to blue light ratio (Red to Blue; R:B) is 1.70 ± 0.15.

The following was found when observing the effectiveness and action of the method for tomato farming during the vegetative phase without natural light of the invention:
- 5% more leaves compared to plants grown under a control lamp (HPS),
- 43% power savings compared to farming under an HPS lamp,
- 22% greater leaf area compared to farming under an HPS lamp.

**Table 2.4. Comparison of light source parameters and characteristics of farmed plants.**

| Illumination | Average number of leaves [items] | Total leaf area [cm²] | Fixture power [W] | Energy used for 16 h of illumination [kWh] |
|---|---|---|---|---|
| Light fixture with an LED spectrum until the vegetative phase | 10.5 | 8140 | 160 | 2.56 |
| HPS | 10 | 6661 | 280 | 4.48 |

In the generative growth phase, farming is conducted so that:

### 5. PAR

Light intensity of 200 µmol/m²s for 16 hours per 24 hours is maintained on the top surfaces of plant leaves, and the PAR sensor continuously monitors the PAR values delivered to plants from light fixtures. The PAR value delivered to plants from fixtures is adjusted to farming conditions using software so that the total supplemental light is 200 µmol/m²s at the top plant leaves. The light fixture is fitted with a spectroradiometer to automatically adjust the light spectrum to current lighting conditions in real time so that a constant light spectrum is maintained throughout the growth phase.

When the detected value is too low, the PAR sensor automatically increases fixture power. When the PAR value is too high, the fixture power is automatically reduced.

### 6. Spectrum

During the generative phase in a farming tent, a spectrum consisting of white light with peak emissions of artificial blue light and artificial red light is maintained for 16 hours per 24 hours. The red to blue light ratio (Red to Blue; R:B) is 2.40 ± 0.15.

The invention, using the function of adaptation of the PAR value and spectral composition, achieves a shorter plant growth cycle and increases the yield and quality of produce, thus improving the effectiveness of the tomato production process and reducing power consumption.

The following was found when observing the effectiveness and action of the method for tomato farming during the generative phase without natural light of the invention:
- power consumption decreased by 54%,
- the weight of tomatoes produced from 1 W using the aforementioned spectrum was 134% higher compared to a control lamp (HPS),
- 6% more tomatoes on average were obtained from one plant farmed using the aforementioned spectrum compared to plants farmed using a control lamp (HPS),
- the average weight of a single tomato was 17% greater with the aforementioned spectrum compared to the HPS lamp,
- the total weight of tomatoes with footstalks produced by one plant was 21% higher compared to results under the HPS lamp,
- the content of reducing sugars in tomatoes harvested from the aforementioned spectrum was 30% higher compared to HPS,
- vitamin C content in tomatoes was 7% higher compared to fruit harvested under the HPS lamp,
- lycopene content in tomatoes was 4% higher compared to fruit harvested under the HPS lamp.

**Table 2.5. Comparison of power consumption between the spectrum being part of the invention and commonly used HPS greenhouse lighting.**

| Illumination | Fixture power [W] | Energy used for 16 h of illumination [kWh] |
|---|---|---|
| Light fixture with an LED spectrum until the vegetative phase | 129 | 2.06 |
| HPS | 280 | 4.48 |

**Table 2.6. Comparison of results obtained with the spectrum being part of the invention and commonly used HPS greenhouse lighting.**

| Illumination | Weight of tomatoes produced from 1 W [g/W] | Number of tomatoes per one plant [items] | Average weight of one tomato [g] | Total weight of tomatoes with footstalks produced by one plant [g] |
|---|---|---|---|---|
| Light fixture with an LED spectrum until the generative phase | 10.67 | 17 | 82 | 1377 |
| HPS | 4.55 | 16 | 70 | 1138 |

**Table 2.7. Comparison of biochemical parameters obtained with the spectrum being part of the invention and commonly used HPS greenhouse lighting.**

| Illumination | Content of reducing sugars [mg/mL tomato extract] | Vitamin C content [mg/100 mL tomato extract] | Lycopene content [mg/kg] |
|---|---|---|---|
| Light fixture with an LED spectrum until the generative phase | 1.99 | 11.39 | 68.74 |
| HPS | 1.53 | 10.65 | 66.25 |

The following was found when observing the effectiveness and action of the method for tomato farming during the phase in greenhouse conditions of the invention:
- power savings of 20% compared to standard greenhouse lighting,
- the total of tomatoes harvested from plants additionally illuminated using the aforementioned spectrum was 13% greater than the total of tomatoes harvested from plants additionally illuminated with HPS lamps.

**Table 2.8. Comparison of results obtained with the spectrum being part of the invention and commonly used HPS greenhouse lighting.**

| Illumination | Total tomatoes harvested [kg] | Actual power of a single light fixture [W] | Energy used during 16 h of additional illumination (20 light fixtures) [kWh] |
|---|---|---|---|
| Light fixture with an LED spectrum until the generative phase | 697.18 | 585 | 187.2 |
| HPS | 619.70 | 730 | 233.6 |

A device for illuminating tomato plants in confined spaces without natural light and in greenhouse conditions contains a housing formed as a radiator, having known means to ensure its tightness, in which LEDs in the RGB system are fitted, connected to a known electronic power supply system indirectly through a spectroradiometer. The LEDs have adjustable power ranging from 160 µmol/m²s to 200 µmol/m²s. Electroluminescent LEDs used in the fixture are selected so that the light band includes violet and blue regions with wavelengths of 400-500 nm, red and far red regions with wavelengths of 600-800 nm and/or green spectral regions with wavelengths of 500-600 nm.

### Example 3 - greenhouse farming

In the method for illuminating and farming tomato plants in confined spaces without natural light and in greenhouse conditions as presented herein, the growing facility is equipped with a ventilation system and environmental sensors to monitor temperature and humidity. The temperature of the growing facility is set so that it is between 24 and 26°C during the day and 20-22°C at night, and the humidity is set so that it is in a range of 50-60%. Temperature and humidity control is executed using an air conditioner, wherein plants are sprayed with an aqueous solution of a foliar fertilizer when the humidity drops below 50%.

For soilless breeding in mineral wool, plants are watered with water having a pH of 4.8 and fertilized with 0.2%±0.15 fertilizer solution with composition listed in Table 3.1 and a pH value of 4.8; EC 2.60 mS/cm. In addition, a calcium and magnesium supplement is used for watering in the vegetative phase and throughout the generative phase, with composition listed in Table 3.2 and a dosage of 1 mL/1 L water. Foliar spraying of plants is performed once a week with 17% calcium nitrate solution and a supplemental fertilizer with composition listed in Table 3.3; dosage: 2 mL/1 L water, ±0.5 µL/L water.

**Table 3.1. The percentage content of components in the fertilizer used in tomato farming.**

| Component | Content [%] |
|---|---|
| N | 8.2 |
| MgO | 2.8 |
| Cu | 0.01 |
| Mo | 0.003 |
| P₂O₅ | 11.5 |
| SO₃ | 5.7 |
| Fe | 0.23 |
| Zn | 0.03 |
| K₂O | 36.1 |
| B | 0.04 |
| Mn | 0.14 |

**Table 3.2. The percentage content of components in the calcium and magnesium supplement used in tomato farming.**

| Component | Content [%] |
|---|---|
| Total nitrogen | 5.9 |
| Nitrate nitrogen | 5.1 |
| Amide nitrogen | 0.8 |
| Calcium oxide | 6.8 |
| Magnesium oxide | 2.4 |

**Table 3.3. The percentage content of components in the supplemental fertilizer in tomato farming.**

| Component | Content [%] |
|---|---|
| N | 3.5 |
| Cu | 0.002 |
| Mo | 0.001 |
| P₂O₅ | 4.0 |
| Fe | 0.04 |
| Zn | 0.002 |
| K₂O | 7.5 |
| B | 0.01 |
| Mn | 0.01 |

During plant growth, the plants are illuminated with a light fixture fitted with LEDs for 16 hours per 24 hours, so that at least one tomato plant is illuminated in each phase of development (including the seed), while light intensity not lower than 160 µmol/m²s is maintained for 16 hours and a spectrum adjusted to the phase of plant growth so that the red to blue light ratio (Red to Blue; R:B) is 1.70 ± 0.15.

The light in the method of the invention may be used in lower doses during sunny days in the greenhouse and in higher doses when sunlight is insufficient. The current light demand is determined using a PAR sensor and a spectroradiometer. Lighting intensity and spectral composition are adjusted automatically using specially designed software.

In the vegetative phase, farming is conducted so that:

### VII. PAR

Both in indoor and in greenhouse farming, illumination of 160 µmol/m²s for 16 hours per 24 hours is maintained on the top surfaces of plant leaves.

The PAR value delivered to plants both from light fixtures and from sunlight is continuously monitored using a PAR sensor. The PAR value delivered to plants from fixtures is adjusted to ambient conditions using a digital machine so that the total of sunlight and supplemental light is 160 µmol/m²s at the top plant leaves. The light fixture is fitted with a spectroradiometer used with software to adjust the light spectrum to current weather conditions in real time so that a constant light spectrum is maintained throughout the growth phase irrespective of the current ambient conditions.

When the detected value is too low, the PAR sensor automatically increases fixture power. When the PAR value is too high, the fixture power is automatically reduced.

### VIII. Spectrum

During the vegetative phase in a greenhouse, natural sunlight is supplemented for 16 hours per 24 hours so as to finally obtain the aforementioned spectrum, that is, white light with blue and red peaks; R:B 1.70 ± 0.15.

The following was found when observing the effectiveness and action of the method for tomato farming during the vegetative phase without natural light of the invention:
- 5% more leaves compared to plants grown under a control lamp (HPS),
- 43% power savings compared to farming under an HPS lamp,
- 22% greater leaf area compared to farming under an HPS lamp.

**Table 3.4. Comparison of light source parameters and characteristics of farmed plants.**

| Illumination | Average number of leaves [items] | Total leaf area [cm²] | Fixture power [W] | Energy used for 16 h of illumination [kWh] |
|---|---|---|---|---|
| Light fixture with an LED spectrum until the vegetative phase | 10.5 | 8140 | 160 | 2.56 |
| HPS | 10 | 6661 | 280 | 4.48 |

In the generative growth phase, farming is conducted so that:

### 7. PAR

The light intensity of 200 µmol/m²s for 16 hours per 24 hours is maintained on the top surfaces of plant leaves.

The PAR value delivered to plants both from light fixtures and from sunlight is continuously monitored using a PAR sensor. The PAR value delivered to plants from fixtures is adjusted to ambient conditions using software so that the total of sunlight and supplemental light is 200 µmol/m²s at the top plant leaves. The light fixture is fitted with a spectroradiometer to automatically adjust the light spectrum to current weather conditions in real time so that a constant light spectrum is maintained throughout the growth phase irrespective of the current ambient conditions.

When the detected value is too low, the PAR sensor automatically increases fixture power. When the PAR value is too high, the fixture power is automatically reduced.

### 8. Spectrum

During the generative phase in a greenhouse, natural sunlight is supplemented with a light fixture for 16 hours per 24 hours, so that as a result, a spectrum consisting of white light with blue and red peaks is obtained, with a red to blue light ratio of 10.00 ± 0.15.

The light spectrum in greenhouse farming is continuously monitored using a spectroradiometer. The spectroradiometer continuously supplements any missing wavelengths so that a constant spectrum is maintained throughout the generative phase.

The invention, using the function of adaptation of the PAR value and spectral composition, achieves a shorter plant growth cycle and increases the yield and quality of produce, thus improving the effectiveness of the tomato production process and reducing power consumption.

The following was found when observing the effectiveness and action of the method for tomato farming during the generative phase without natural light of the invention:
- power consumption decreased by 54%,
- the weight of tomatoes produced from 1 W using the aforementioned spectrum was 134% higher compared to a control lamp (HPS),
- 6% more tomatoes on average were obtained from one plant farmed using the aforementioned spectrum compared to plants farmed using a control lamp (HPS),
- the average weight of a single tomato was 17% greater with the aforementioned spectrum compared to the HPS lamp,
- the total weight of tomatoes with footstalks produced by one plant was 21% higher compared to results under the HPS lamp,
- the content of reducing sugars in tomatoes harvested from the aforementioned spectrum was 30% higher compared to HPS,
- vitamin C content in tomatoes was 7% higher compared to fruit harvested under the HPS lamp,
- lycopene content in tomatoes was 4% higher compared to fruit harvested under the HPS lamp.

**Table 3.5. Comparison of power consumption between the spectrum being part of the invention and commonly used HPS greenhouse lighting.**

| Illumination | Fixture power [W] | Energy used for 16 h of illumination [kWh] |
|---|---|---|
| Light fixture with an LED spectrum until the vegetative phase | 129 | 2.06 |
| HPS | 280 | 4.48 |

**Table 3.6. Comparison of results obtained with the spectrum being part of the invention and commonly used HPS greenhouse lighting.**

| Illumination | Weight of tomatoes produced from 1 W [g/W] | Number of tomatoes per one plant [items] | Average weight of one tomato [g] | Total weight of tomatoes with footstalks produced by one plant [g] |
|---|---|---|---|---|
| Light fixture with an LED spectrum until the generative phase | 10.67 | 17 | 82 | 1377 |
| HPS | 4.55 | 16 | 70 | 1138 |

**Table 3.7. Comparison of biochemical parameters obtained with the spectrum being part of the invention and commonly used HPS greenhouse lighting.**

| Illumination | Content of reducing sugars [mg/mL tomato extract] | Vitamin C content [mg/100 mL tomato extract] | Lycopene content [mg/kg] |
|---|---|---|---|
| Light fixture with an LED spectrum until the generative phase | 1.99 | 11.39 | 68.74 |
| HPS | 1.53 | 10.65 | 66.25 |

The following was found when observing the effectiveness and action of the method for tomato farming during the phase in greenhouse conditions of the invention:
- power savings of 20% compared to standard greenhouse lighting,
- the total of tomatoes harvested from plants additionally illuminated using the aforementioned spectrum was 13% greater than the total of tomatoes harvested from plants additionally illuminated with HPS lamps.

**Table 3.8. Comparison of results obtained with the spectrum being part of the invention and commonly used HPS greenhouse lighting.**

| Illumination | Total tomatoes harvested [kg] | Actual power of a single light fixture [W] | Energy used during 16 h of additional illumination (20 light fixtures) [kWh] |
|---|---|---|---|
| Light fixture with an LED spectrum until the generative phase | 697.18 | 585 | 187.2 |
| HPS | 619.70 | 730 | 233.6 |

A device for illuminating tomato plants in confined spaces without natural light and in greenhouse conditions contains a housing formed as a radiator, having known means to ensure its tightness, in which LEDs in the RGB system are fitted, connected to a known electronic power supply system indirectly through a spectroradiometer. The LEDs have adjustable power ranging from 160 µmol/m²s to 200 µmol/m²s. Electroluminescent LEDs used in the fixture are selected so that the light band includes violet and blue regions with wavelengths of 400-500 nm, red and far red regions with wavelengths of 600-800 nm and/or green spectral regions with wavelengths of 500-600 nm.

### Example 4 - farming in confined spaces without natural light - indoor farming

In the method for illuminating and breeding tomato plants in confined spaces without natural light as presented herein, the breeding/growing facility is equipped with a ventilation system and environmental sensors to monitor temperature and humidity. The temperature of the growing facility is set so that it is between 24 and 26°C during the day and 20-22°C at night, and the humidity is set so that it is in a range of 50-60%. Temperature and humidity control is executed using an air conditioner, wherein plants are sprayed with aquaneous solution of a foliar fertilizer when the humidity drops below 50%.

For soilless breeding in mineral wool, plants are watered with water having a pH of 4.8 and fertilized with 0.2%±0.15 fertilizer solution with composition listed in Table 4.1 and a pH value of 4.8; EC 2.60 mS/cm. In addition, a calcium and magnesium supplement is used for watering in the vegetative phase and throughout the generative phase, with composition listed in Table 4.2 and a dosage of 1 mL/1 L water. Foliar spraying of plants is performed once a week with 17% calcium nitrate solution and a supplemental fertilizer with composition listed in Table 4.3; dosage: 2 mL/1 L water, ±0.5 µL/L water.

**Table 4.1. The percentage content of components in the fertilizer used in tomato farming.**

| Component | Content [%] |
|---|---|
| N | 8.2 |
| MgO | 2.8 |
| Cu | 0.01 |
| Mo | 0.003 |
| P₂O₅ | 11.5 |
| SO₃ | 5.7 |
| Fe | 0.23 |
| Zn | 0.03 |
| K₂O | 36.1 |
| B | 0.04 |
| Mn | 0.14 |

**Table 4.2. The percentage content of components in the calcium and magnesium supplement used in tomato farming.**

| Component | Content [%] |
|---|---|
| Total nitrogen | 5.9 |
| Nitrate nitrogen | 5.1 |
| Amide nitrogen | 0.8 |
| Calcium oxide | 6.8 |
| Magnesium oxide | 2.4 |

**Table 4.3. The percentage content of components in the supplemental fertilizer in tomato farming.**

| Component | Content [%] |
|---|---|
| N | 3.5 |
| Cu | 0.002 |
| Mo | 0.001 |
| P₂O₅ | 4.0 |
| Fe | 0.04 |
| Zn | 0.002 |
| K₂O | 7.5 |
| B | 0.01 |
| Mn | 0.01 |

During plant growth, the plants are illuminated with a light fixture fitted with LEDs for 16 hours per 24 hours, so that at least one tomato plant is illuminated in each phase of development (including the seed), while light intensity not lower than 160 µmol/m²s is maintained for 16 hours and a spectrum adjusted to the phase of plant growth so that the red to blue light ratio (Red to Blue; R:B) is 1.70 ± 0.15.

The light in the method of the invention may be used in lower doses during sunny days in the greenhouse and in higher doses when sunlight is insufficient. The current light demand is determined using a PAR sensor and a spectroradiometer. Lighting intensity and spectral composition are adjusted automatically using specially designed software.

In the vegetative phase, farming is conducted so that:

### IX. PAR

Both in indoor and in greenhouse farming, illumination of 160 µmol/m²s for 16 hours per 24 hours is maintained on the top surfaces of plant leaves.

The PAR value delivered to plants from light fixtures is continuously monitored using a PAR sensor. The PAR value delivered to plants from fixtures is adjusted using a digital machine so that the total supplemental light is 160 µmol/m²s at the top plant leaves. The light fixture is fitted with a spectroradiometer used with software to adjust the light spectrum to current conditions in real time so that a constant light spectrum is maintained throughout the growth phase.

When the detected value is too low, the PAR sensor automatically increases fixture power. When the PAR value is too high, the fixture power is automatically reduced.

### X. Spectrum

During the vegetative phase in a farming tent, a spectrum consisting of white light with peak emissions of artificial blue light and artificial red light is maintained for 16 hours per 24 hours. The red to blue light ratio (Red to Blue; R:B) is 1.70 ± 0.15.

The following was found when observing the effectiveness and action of the method for tomato farming during the vegetative phase without natural light of the invention:
- 5% more leaves compared to plants grown under a control lamp (HPS),
- 43% power savings compared to farming under an HPS lamp,
- 22% greater leaf area compared to farming under an HPS lamp.

**Table 4.4. Comparison of light source parameters and characteristics of farmed plants.**

| Illumination | Average number of leaves [items] | Total leaf area [cm2] | Fixture power [W] | Energy used for 16 h of illumination [kWh] |
|---|---|---|---|---|
| Light fixture with an LED spectrum until the vegetative phase | 10.5 | 8140 | 160 | 2.56 |
| HPS | 10 | 6661 | 280 | 4.48 |

In the generative growth phase, farming is conducted so that:

### 9. PAR

Light intensity of 200 µmol/m²/s for 16 hours per 24 hours is maintained on the top surfaces of plant leaves, and the PAR sensor continuously monitors the PAR values delivered to plants from light fixtures. The PAR value delivered to plants from fixtures is adjusted to farming conditions using software so that the total of supplemental light is 200 µmol/m²s at the top plant leaves. The light fixture is fitted with a spectroradiometer to automatically adjust the light spectrum to current lighting conditions in real time so that a constant light spectrum is maintained throughout the growth phase.

When the detected value is too low, the PAR sensor automatically increases fixture power. When the PAR value is too high, the fixture power is automatically reduced.

### 10. Spectrum

During the generative phase in a farming tent, a spectrum consisting of white light with peak emissions of artificial blue light and artificial red light is maintained for 16 hours per 24 hours. The red to blue light ratio (Red to Blue; R:B) is 2.40 ± 0.15.

The invention, using the function of adaptation of the PAR value and spectral composition, achieves a shorter plant growth cycle and increases the yield and quality of produce, thus improving the effectiveness of the tomato production process and reducing power consumption.

The following was found when observing the effectiveness and action of the method for tomato farming during the generative phase without natural light of the invention:
- power consumption decreased by 54%,
- the weight of tomatoes produced from 1 W using the aforementioned spectrum was 134% higher compared to a control lamp (HPS),
- 6% more tomatoes on average were obtained from one plant farmed using the aforementioned spectrum compared to plants farmed using a control lamp (HPS),
- the average weight of a single tomato was 17% greater with the aforementioned spectrum compared to the HPS lamp,
- the total weight of tomatoes with footstalks produced by one plant was 21% higher compared to results under the HPS lamp,
- the content of reducing sugars in tomatoes harvested from the aforementioned spectrum was 30% higher compared to HPS,
- vitamin C content in tomatoes was 7% higher compared to fruit harvested under the HPS lamp,
- lycopene content in tomatoes was 4% higher compared to fruit harvested under the HPS lamp.

**Table 4.5. Comparison of power consumption between the spectrum being part of the invention and commonly used HPS greenhouse lighting.**

| Illumination | Fixture power [W] | Energy used for 16 h of illumination [kWh] |
|---|---|---|
| Light fixture with an LED spectrum until the vegetative phase | 129 | 2.06 |
| HPS | 280 | 4.48 |

**Table 4.6. Comparison of results obtained with the spectrum being part of the invention and commonly used HPS greenhouse lighting.**

| Illumination | Weight of tomatoes produced from 1 W [g/W] | Number of tomatoes per one plant [items] | Average weight of one tomato [g] | Total weight of tomatoes with footstalks produced by one plant [g] |
|---|---|---|---|---|
| Light fixture with an LED spectrum until the generative phase | 10.67 | 17 | 82 | 1377 |
| HPS | 4.55 | 16 | 70 | 1138 |

**Table 4.7. Comparison of biochemical parameters obtained with the spectrum being part of the invention and commonly used HPS greenhouse lighting.**

| Illumination | Content of reducing sugars [mg/mL tomato extract] | Vitamin C content [mg/100 mL tomato extract] | Lycopene content [mg/kg] |
|---|---|---|---|
| Light fixture with an LED spectrum until the generative phase | 1.99 | 11.39 | 68.74 |
| HPS | 1.53 | 10.65 | 66.25 |

The following was found when observing the effectiveness and action of the method for tomato farming during the phase in greenhouse conditions of the invention:
- power savings of 20% compared to standard greenhouse lighting,
- the total of tomatoes harvested from plants additionally illuminated using the aforementioned spectrum was 13% greater than the total of tomatoes harvested from plants additionally illuminated with HPS lamps.

**Table 4.8. Comparison of results obtained with the spectrum being part of the invention and commonly used HPS greenhouse lighting.**

| Illumination | Total tomatoes harvested [kg] | Actual power of a single light fixture [W] | Energy used during 16 h of additional illumination (20 light fixtures) [kWh] |
|---|---|---|---|
| Light fixture with an LED spectrum until the generative phase | 697.18 | 585 | 187.2 |
| HPS | 619.70 | 730 | 233.6 |

A device for illuminating tomato plants in confined spaces without natural light and in greenhouse conditions contains a housing formed as a radiator, having known means to ensure its tightness, in which LEDs in the RGB system are fitted, connected to a known electronic power supply system indirectly through a spectroradiometer. The LEDs have adjustable power ranging from 160 µmol/m²s to 200 µmol/m²s. Electroluminescent LEDs used in the fixture are selected so that the light band includes violet and blue regions with wavelengths of 400-500 nm, red and far red regions with wavelengths of 600-800 nm and/or green spectral regions with wavelengths of 500-600 nm.

Although the invention has been described in conjunction with specific embodiments thereof, it is evident that many alternatives, modifications, and variations will be apparent to those skilled in the art. Accordingly, it is intended to embrace all such alternatives, modifications and variations that fall within the spirit and broad scope of the appended claims.

## Claims

1. A method for illuminating and growing tomato plants in confined spaces without natural light and in greenhouse conditions, the method comprising:
- equipping a breeding/growing facility with a ventilation system and environmental sensors to monitor at least a temperature and a humidity;
- setting the temperature of the growing facility so that it is between 24 and 26°C during a day and 20-22°C at a night,
- setting the humidity so that it is between 50 and 60%,
**characterized in that**
- during growth of the plants, illuminating the plants by means of a light fixture comprising Light Emitting Diodes (LEDs) for at least 16 hours per 24 hours, so that at least one tomato plant is illuminated in each phase of development (including the seed phase), by maintaining light intensity not lower than 160 µmol/m²/s for 16 hours and adjusting light spectrum to the phase of plant growth so that a red to blue light ratio (R:B) is at least 1.70 ± 0.15,
- conducting farming in the vegetative phase so that:
PAR
- both in indoor and greenhouse farming, maintaining illumination of 160 µmol/m²s for 16 hours per 24 hours on top surfaces of plant leaves, determining current light demand using a PAR sensor and a spectroradiometer, and adjusting lighting intensity and spectral composition automatically using dedicated software,
- during the vegetative phase in a farming tent, maintaining a spectrum consisting of white light with peak emissions of artificial blue light and artificial red light for 15 to 17 hours per 24 hours, preferably for 16 hours per 24 hours, and maintaining the red to blue light ratio (R:B) at 2.4 ±15%
- conducting farming in the generative growth phase so that:
PAR
- both in indoor and greenhouse farming, maintaining light intensity of 200 µmol/m²s on top surfaces of plant leaves for 15 to 17 hours per 24 hours, preferably for 16 hours per 24 hours, continuously monitoring, by means of the PAR sensor, PAR values delivered to the plants both from the light fixtures and from sunlight, and adjusting the PAR value delivered to the plants from the light fixtures to ambient conditions using software so that the total of sunlight and supplemental light is 200 µmol/m²s at the top plant leaves,
- during the generative phase in a farming tent, maintaining a spectrum consisting of white light with peak emissions of artificial blue light and artificial red light for 16 hours per 24 hours, and maintaining the red to blue light ratio (R:B) at 2.40 ±0.15,
- and during the generative phase in a greenhouse, supplementing natural sunlight with the light fixture for 15 to 17 hours per 24 hours, preferably for 16 hours per 24 hours, so as to obtain a spectrum consisting of white light with blue and red peaks, with the red to blue light ratio of 10.00 ±0.15,
- and, by means of the PAR sensor, continuously monitoring a PAR value delivered to plants, wherein the PAR value delivered to plants from the light fixtures is adjusted by means of a digital machine so that the total sunlight and supplemental light is 160 µmol/m²s at the top plant leaves, and wherein the light fixture is fitted with a spectroradiometer to adjust the light spectrum to weather conditions in real time using software, so as to maintain a constant light spectrum throughout the growth phase irrespective of the current ambient conditions.

2. The method according to claim 1, comprising controlling the temperature and the humidity using an air conditioner, and further comprising, when the humidity drops below 50%, spraying the plants with water or an aqueous solution of a foliar fertilizer.

3. The method according to claim 1 or 2, comprising:
- breeding the plants on a mineral wool,
- watering the plants with water having a pH value of 4.5 to 5.25, preferably 4.8,
- fertilizing the plants with a 0.2% ±0.15 fertilizer solution having a composition listed in Table C.1 and a pH value of 4.8, EC of 2.60 mS/cm,
- in the vegetative phase and throughout the generative phase, watering the plants with a calcium and magnesium supplement having a composition listed in Table C.2, using a dosage of: between 0.5 and 2 mL/1 L water, preferably 1 mL/1 L water,
- once per week, foliar spraying the plants with a 15 to 20%, preferably 17% calcium nitrate solution and a supplemental fertilizer having a composition listed in Table C.3, using a dosage of: 2 mL/1 L water ±0.5 µL/L water.
**Table C.1. Percentage content of components in the fertilizer used in tomato farming.**
| Component | Content [%] |
|---|---|
| N | 8.2 |
| MgO | 2.8 |
| Cu | 0.01 |
| Mo | 0.003 |
| P₂O₅ | 11.5 |
| SO₃ | 5.7 |
| Fe | 0.23 |
| Zn | 0.03 |
| K₂O | 36.1 |
| B | 0.04 |
| Mn | 0.14 |
**Table C.2. Percentage content of components in the calcium and magnesium supplement used in tomato farming.**
| Component | Content [%] |
|---|---|
| Total nitrogen | 5.9 |
| Nitrate nitrogen | 5.1 |
| Amide nitrogen | 0.8 |
| Calcium oxide | 6.8 |
| Magnesium oxide | 2.4 |
**Table C.3. Percentage content of components in the supplemental fertilizer in tomato farming.**
| Component | Content [%] |
|---|---|
| N | 3.5 |
| Cu | 0.002 |
| Mo | 0.001 |
| P₂O₅ | 4.0 |
| Fe | 0.04 |
| Zn | 0.002 |
| K₂O | 7.5 |
| B | 0.01 |
| Mn | 0.01 |

4. A device for illuminating tomato plants in confined spaces without natural light and in greenhouse conditions, the device comprising a tight housing formed as a radiator, RGB (Red, Green, Blue) Light Emitting Diodes (LEDs) fitted within the tight housing and connected to an electronic power supply system indirectly via a spectroradiometer, **characterized in that** the LEDs have adjustable power at least between 160 µmol/m²s to 200 µmol/m²s, and wherein the LEDs are electroluminescent LEDs with a light band that includes violet and blue regions with wavelengths of 400 to 500 nm, red and far red regions with wavelengths of 600 to 800 nm and/or green spectral regions with wavelengths of 500 to 600 nm.
